# EUROPÄISCHE PATENTSCHRIFT

(11) **EP 1 745 916 B1**
(45) Veröffentlichungstag und Bekanntmachung des Hinweises auf die Patenterteilung: **14.09.2011**
(21) Anmeldenummer: 05015798.1
(22) Anmeldetag: 20.07.2005
(51) Int. Cl.: B29C 65/08, B31B 19/64, B65B 51/22, B31B 37/00

(54) **Vorrichtung und Verfahren zum Anbringen einer Schweissnaht sowie Folienbeutel**
Device and process for applying a weld seam as well as film bag
Dispositif et procédé pour appliquer une soudure ainsi que sachet

(43) Veröffentlichungstag der Anmeldung: 24.01.2007
(73) Patentinhaber: INDAG Gesellschaft für Industriebedarf mbH & Co. Betriebs KG, 69214 Eppelheim (DE)
(72) Erfinder:
(74) Vertreter: Grünecker, Kinkeldey, Stockmair & Schwanhäusser Anwaltssozietät

(56) Entgegenhaltungen:
- EP-A- 1 066 951
- EP-A- 1 088 760
- EP-A- 1 127 794
- DE-A1- 1 604 580
- FR-A- 2 829 962
- GB-A- 1 120 881
- US-A- 4 251 303
- US-A- 4 534 818
- US-A1- 2003 152 297
- US-B1- 6 390 168
- FOMENKO A F ET AL: "ULTRASOUND WELDING OF POLYMER MULTILAYERED FILM MATERIALS" WELDING INTERNATIONAL, WOODHEAD PUBLISHING LIMITED, CAMBRIDGESHIRE, GB, Bd. 15, Nr. 7, 2001, Seiten 583-584, XP001053874 ISSN: 0950-7116
- PATENT ABSTRACTS OF JAPAN Bd. 005, Nr. 119 (M-081), 31. Juli 1981 (1981-07-31) -& JP 56 058822 A (YUASA BATTERY CO LTD), 22. Mai 1981 (1981-05-22)

## Beschreibung

Die Erfindung betrifft eine Vorrichtung und ein Verfahren zum Anbringen einer Schweißnaht an einen Folienbeutel, sowie einen Folienbeutel selber.

Folienbeutel sind als Verpackung für Flüssigkeiten oder pasteuse Massen bekannt. Beispielsweise werden Getränke, Tiernahrungsmittel, Cremes, Farben, Seifen, etc. in Folienbeutel verpackt. Derartige Folienbeutel können beispielsweise Standbodenbeutel sein, die sich aus zwei Seitenfolien und einer Bodenfolie zusammensetzen.

Die verschiedenen Folien werden hierzu an den jeweiligen Rändern zusammengeschweißt. Dies kann mit einem Heißschweißverfahren, oder auch mit Ultraschallschweißen geschehen.

Die EP 1 088 760 A2, die EP 1 127 794 A2 und die EP 1066 951 A2 offenbaren jeweils eine Ultraschallschweißvorrichtung.

Die US4,534,818 offenbart ein Verfahren und eine Vorrichtung zum Ultraschallschweißen und die DE 1 604 580 offenbart ein Verfahren und eine Vorrichtung zur Herstellung von allseitig geschlossenen Beutelpackungen.

Die Schweißnähte weisen gelegentlich kleinere unerwünschte Undichtigkeiten auf.

Aufgabe der vorliegenden Erfindung ist es daher, eine Vorrichtung und ein Verfahren zum Anbringen einer Schweißnaht an einen Folienbeutel zu schaffen, die verbesserte Schweißnähte aufweisen.

Diese Aufgabe wird gelöst durch eine Vorrichtung nach Anspruch 1 oder 8, sowie durch ein Verfahren nach Anspruch 9. Vorteilhafte Ausführungsformen sind in den Unteransprüchen offenbart.

Zum Ausbilden der Schweißnaht ist ein Ultraschallhammer und ein Amboss vorgesehen. Mit dem Ultraschallhammer können Ultraschallwellen in das Folienmaterial eingeleitet werden, dass dieses lokal Aufschmelzen lässt. Zur effektiven Einkoppelung der Ultraschallwellen aus dem Ultraschallhammer in das Folienmaterial, kann das Folienmaterial zwischen Ultraschallhammer und einem Amboss eingeklemmt werden.

Der Amboss weist auf seiner zum Ultraschallhammer gerichteten Seite einen Vorsprung auf, um den Folienbeutel zwischen Vorsprung und Ultraschallhammer einzuklemmen.

Bei dem Amboss ist in dem Vorsprung mindestens eine Vertiefung, beispielsweise in Form einer Rille vorgesehen. Diese Rille verläuft parallel zu dem Vorsprung bzw. parallel zu der Schweißnaht.

Im Bereich des Vorsprungs des Ambosses kann das Folienmaterial bei Ultraschalleinwirkung aufschmelzen und durch den Druck zwischen Ultraschallhammer und Amboss aus diesem Bereich herausgedrückt werden. Dabei bilden sich an den Rändern des Ambosses Dichtkeile aus dem aufgeschmolzenen Material. Diese Dichtkeile verkleben das nicht aufgeschmolzene Material miteinander und führen zu einer Abdichtung der Schweißnaht.

Durch die Anordnung der Vertiefung in dem Vorsprung kann eine Schweißnaht mit vier solchen Dichtkeilen erzeugt werden, die somit zu einer besonders guten und sicheren Dichtwirkung führen.

Die beiden Dichtkeile, die sich an den Rändern der Vertiefung ausbilden, können auch im Bereich der Vertiefung zusammenwachsen, so dass sich hier effektiv ein einzelner Dichtkeil oder vielmehr eine Dichtzone ergibt, so dass insgesamt drei Dichtkeile erzeugt werden können.

Damit das aufgeschmolzene Folienmaterial, das in den Bereich der Vertiefung fließt, dort zu keiner all zu großen Aufwölbung der Folie führt, bzw. unter zusätzlicher Druckwirkung mit dem nicht aufgeschmolzenen Folienmaterial in Kontakt gebracht wird, ist es von Vorteil, dass die Vertiefung eine in Vergleich zur Höhe des Vorsprungs recht geringe Tiefe hat.

Für gute Dichtergebnisse der Schweißnaht hat die Vertiefung eine Breite, die etwa 25 % bis 50 % und bevorzugter etwa 30 % bis 35% der Breite des Vorspungs beträgt.

Der Amboss ist vorzugsweise nicht festgelagert, sondern kippbar. Hier ist eine Kippung um mindestens 2 Achsen vorteilhaft. Die Achsen müssen nicht durch den Amboss selber verlaufen (was auch möglich ist), sondern können auch außerhalb des Ambosses verlaufen.

Vorteilhafterweise ist der Amboss so gelagert, dass er in Richtung des Ultraschallhammers vorgespannt ist, wobei dies vorzugsweise durch 2 Druckelemente wie etwa Federn, Gummielemente, oder Ähnliches geschieht.

Durch diese Lagerungen und Vorspannungen ist es möglich, einen gleichmäßigen Druck entlang der zu bildenden Schweißnaht zwischen Amboss und Ultraschallhammer zu gewährleisten. Dies ist für die Ausbildung einer gleichmäßigen Schweißnaht entlang der Schweißnahtlänge vorteilhaft.

Für eine gute Ausrichtung des Ambosses ist es vorteilhaft, dass die beiden Druckelemente etwa an den Enden des Ambosses angreifen.

Für eine weitere Erhöhung der Zuverlässigkeit der Dichtheit der Schweißnaht kann auch mehr als nur genau eine Vertiefung (Rille) vorgesehen sein, wobei diese Vertiefungen im wesentlichen parallel zueinander verlaufen. Dadurch kann eine noch höhere Anzahl von Dichtkeilen als drei oder vier Dichtkeile erreicht werden, die eine noch bessere Dichtwirkung zur Folge haben.

Vorteilhaft ist eine Vorrichtung, in der mehrere Folienbeutel nebeneinander mit Schweißnähten versehen werden können. Dies erlaubt hohe Durchsatzraten bei gleicher Taktrate und minimalem konstruktiven Aufwand, da die verschiedenen mechanischen Einrichtungen in den verschiedenen Schweißeinrichtungen gemeinsam genutzt werden können.

Bei dem Verfahren wird derjenige Teil eines Folienbeutels, an den eine Schweißnaht angebracht werden soll, zwischen einem Vorsprung eines Ambosses und einem Ultraschallhammer eingeklemmt und durch Beaufschlagen mit Ultraschall durch den Ultraschallhammer die Schweißnaht angebracht. Der Vorsprung des Ambosses weist hierbei mindestens eine Vertiefung auf.

Der Folienbeutel hat eine Schweißnaht, die mindestens zwei Schweißzonen und mindestens drei oder vier Dichtkeile aufweist.

Vorteilhafte Ausführungsformen der Erfindung werden anhand der Figuren erläutert. Dabei zeigt:
- Figur 1: schematische Ansichten eines Folienbeutels
- Figur 2: schematische Schnittzeichnungen der Vorrichtung und des Folienbeutels,
- Figur 3: eine dreidimensionale schematische Darstellung des Ambosses.

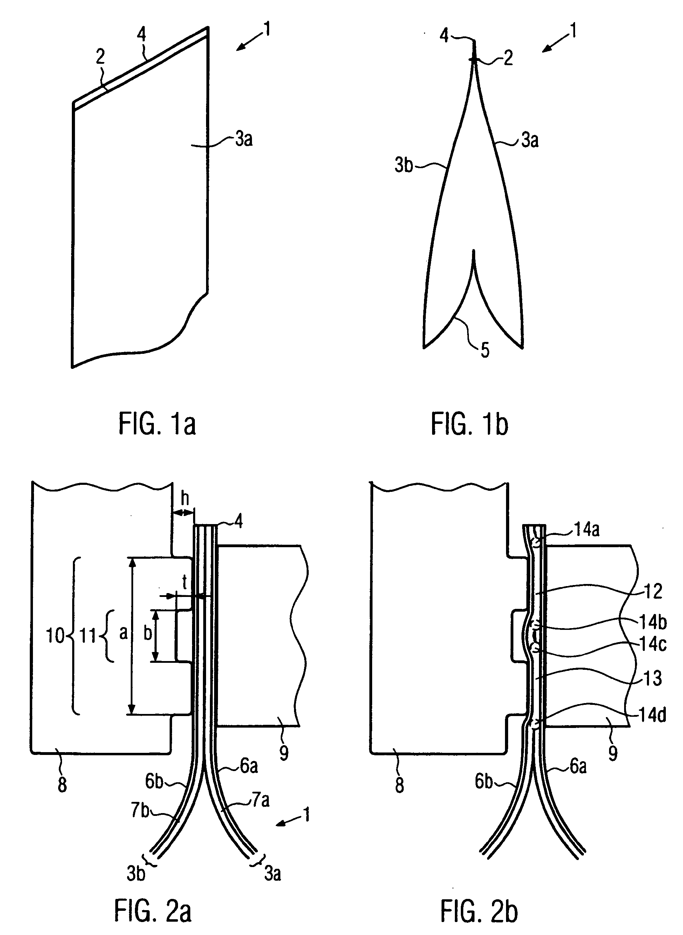

In Figur 1a ist eine dreidimensionale schematische Darstellung eines Folienbeutels 1 gezeigt. In Figur 1b ist derselbe Folienbeutel in Schnittzeichnungen dargestellt. Der Folienbeutel 1 weist zwei Seitenfolien 3 a und 3 b sowie eine Bodenfolie 5 auf. Die Bodenfolie 5 ist hier gefaltet, und an den unteren Enden mit den Rändern der Seitenfolien 3 a und 3 b verschweißt. Die Seitenfolien 3 a und 3 b sind an den in Figur 1 a rechts und links verlaufenden Rändern des Folienbeutels 1 miteinander verschweißt. Diese Verschweißungen der Seitenfolien 3 a, 3 b an den seitlichen Rändern und die Verschwei-ßungen mit der Bodenfolie 5 können durch thermisches Schweißen aber auch durch das hier beschriebene Ultraschallschweißen hergestellt worden sein.

Die Folienbeutel 1 können so hergestellt werden, dass sie am oberen Ende 4 offen sind und noch nicht durch eine Schweißnaht 2 verschlossen sind. Dadurch können die hergestellten Folienbeutel 1 durch das obere Ende 4 gefüllt werden und nach dem Befüllen am oberen Ende 4 mit der Schweißnaht 2 verschlossen werden.

Beim Verschweißen des oberen Endes 4 nach dem Befüllen treten am ehesten Dichtigkeitsprobleme auf, da dann eventuell Verschmutzungen auf der Beutelinnenseite vorliegen, die eine dichte Schweißnaht verhindern. Die im Folgenden beschriebene Vorrichtung und das Verfahren sind daher zum Ausbilden der Schweißnaht 2 am oberen Ende 4 besonders vorteilhaft, können jedoch aber auch für die anderen Schweißnähte eingesetzt werden.

In Figur 2 a ist das obere Ende 4 eines Folienbeutels 1 gezeigt. Im Bereich 4 laufen die beiden Seitenfolien 3a und 3b zusammen. Die hier dargestellten Seitenfolien 3a und 3b setzen sich mindestens aus 2 Schichten 6a, 7a sowie 6b, 7b zusammen. Die Schicht 6a, 6b kann selber wieder verschiedene Lagen umfassen. Sie kann beispielsweise eine Aluminiumfolie und einen nicht leicht schweißbaren Kunststoff umfassen. Die Schicht 6a, 6b kann auch ein Dekormuster umfassen, dass von außen sichtbar ist.

Die Schichten 7a, 7b sind aus schweißfähigem Material wie beispielsweise Polyethylen gefertigt. Die beiden Schichten 7a, 7b der beiden Seitenfolien 3a, 3b haben am oberen Ende 4 unmittelbaren Kontakt miteinander, sie sind jedoch zunächst nicht fest miteinander verbunden. In Figur 2 a ist der Zustand gezeigt, bevor Ultraschall eingekoppelt worden ist.

Das obere Ende 4 des Folienbeutels 1 ist zwischen einem Amboss 8 und einem Ultraschallhammer 9 eingeklemmt dargestellt. Der Amboss 8 weist hierzu einen Vorsprung 10 auf, der in Kontakt mit dem oberen Ende 4 des Folienbeutels 1 ist. Der Amboss 8 und der Ultraschallhammer 9 können voneinander weg und aufeinander zu bewegt werden, beispielsweise durch Verschieben und/oder Verschwenken von entweder dem Amboss 8, dem Ultraschallhammer 9 oder von beidem. Der Amboss 8 ist gegen den Ultraschallhammer 9 vorgespannt oder der Ultraschallhammer 9 gegen den Amboss 8.

Der Ultraschallhammer 9 ist mit einer Ultraschallquelle verbunden, die dafür sorgt, dass durch den Ultraschallhammer 9 Ultraschallwellen in das Material des Folienbeutels 1 eingekoppelt werden können. Dies ist besonders effektiv im Bereich des Vorsprungs 10, da hier ein hoher Druck zwischen dem Ultraschallhammer 9, sowie dem Folienmaterial 1 vorliegen kann.

Der Vorsprung 10 verfügt über eine Breite a und eine Höhe h. In dem Vorsprung 10 ist eine Vertiefung 11 vorgesehen, die beispielsweise die Form einer Rille haben kann. Die Breite b der Vertiefung 11 ist etwa ein Drittel derjenigen des Vorsprungs 10. Weiterhin hat die Vertiefung 11 eine Tiefe t, die etwas geringer ist, als die Höhe h, die die Höhe des Vorsprungs 10 ist.

Statt nur genau eine Vertiefung 11 können auch zwei, drei oder mehr Vertiefungen vorgesehen sein. Zwischen den Vertiefungen befindet sich dann eine Erhöhung (nicht gezeigt), die mit den außerhalb der Rille angeordneten Bereichen des Vorsprungs plan sein kann oder aber auch weniger oder mehr erhöht sein kann. Die Breite der Vertiefungen kann zusammengezählt zwischen 30 % und 35 % der Breite a des Vorsprungs betragen.

In Figur 2b ist der Zustand nach Anlegen des Ultraschall gezeigt. Durch das Anlegen des Ultraschalls schmilzt das Material der Schicht 7 a, 7 b, insbesondere in dem Bereich des Vorsprungs 10, jedoch ohne den Bereich der Vertiefung 11, auf. Dort, wo das Folienmaterial mit Druck an dem Ultraschallhammer 9 anliegt, wird Ultraschall besonders gut in das Folienmaterial eingekoppelt und führt dort zur lokalen Aufwärmung. Durch den Druck zwischen Amboss 8 und Ultraschallhammer 9 fließt das aufgeschmolzene Material aus diesem Bereich (Schweißzone 12, 13) heraus und bildet Dichtkeile im Bereich 14a, 14b, 14c, 14d. Diese Dichtkeile verkleben die beiden Seitenfolien miteinander. Die Schichten 6a, 6b, werden durch den Ultraschall selber nicht aufgeschmolzen. Sie halten das aufgeschmolzene Material der Schichten 7a, 7b jedoch zusammen und ermöglichen ein Fließen des aufgeschmolzenen Materials in der Ebene der Folienlagen (parallel zu der Oberfläche des Ultraschallhammers bzw. des Ambosses. Die Schichten 6a, 6b verhindern auch ein Verkleben der Folien mit dem Amboss 8 oder dem Ultraschallhammer 9.

Durch die Ausbildung von vier Dichtkeilen, die sich sämtliche entlang der Schweißnaht 2 erstrecken, ist eine besonders gute Abdichtung dieser Schweißnaht 2 erreicht.

Bei mehreren Vertiefungen können auch noch mehr Dichtkeile bzw. Schweißzonen erzeugt werden, was eine noch bessere Abdichtung der Schweißnaht ermöglicht.

Die Dichtkeile in den Bereichen 14b und 14c können durch eine niedrige Tiefe t der Vertiefung 11 und/oder durch eine geringe Breite b auch miteinander in Kontakt kommen und in einen einzelnen Dichtkeil übergehen. Wird durch die Vertiefung 11 nur wenig Raum zur Verfügung gestellt, so wird das aufgeschmolzene Material mit Druck in den Bereich der Vertiefung 11 gedrückt bzw. steht dort unter Druck und nimmt dort den gesamten verfügbaren Raum ein. Dies führt zu einer besonders guten Klebwirkung zwischen den nicht aufgeschmolzenen Bereichen der Seitenwandfolien 3a, 3b. Dies gilt auch entsprechend für den Fall von mehreren Vertiefungen 10.

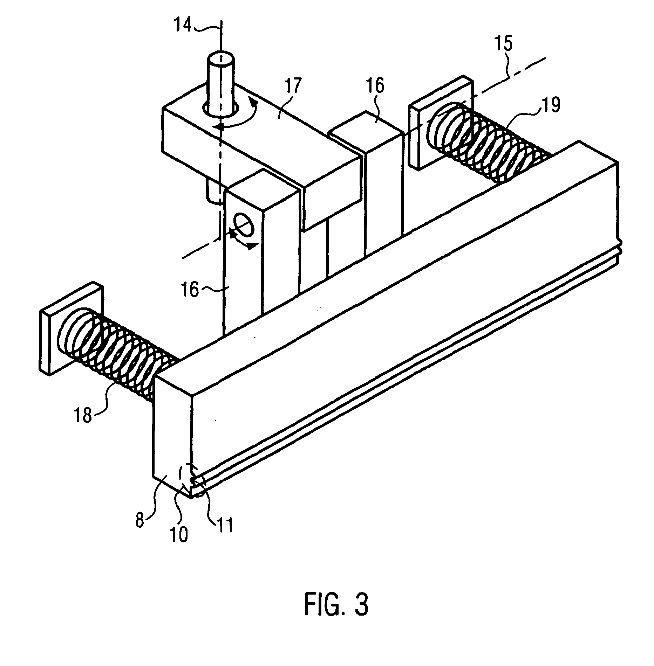

In Figur 3 ist eine schematische dreidimensionale Darstellung eines Ambosses 8 in seiner Lagerung gezeigt. An der Vorderseite des Ambosses 8 ist der Vorsprung 10 mit der Vertiefung 11 zu erkennen. Statt der einen Vertiefung 10 können auch mehre parallel zueinander verlaufende Vertiefungen vorgesehen sein.

Der Amboss 8 ist an schwenkbaren Elementen 16 befestigt, wobei die Schwenkachse 15 parallel zum Vorsprung 10 verläuft.

Der Vorsprung 10 erstreckt sich über die gesamte Länge bzw. den größten Teil der Länge des Ambosses 8.

Die Elemente 16 sind ihrerseits an einem Element 17 gehalten, das selber drehbar gelagert ist. Die Drehachse 14, um die das Element 17 drehbar ist, ist senkrecht zu der Drehachse 15.

Der Amboss 8 kann somit mit geringem mechanischen Aufwand um sowohl die Achse 14, als auch um die Achse 15 gekippt werden.

Um den Amboss 8 gegen den Ultraschallhammer 9 vorzuspannen, sind Federelemente 18, 19 vorgesehen. Diese greifen direkt an den Amboss 8 an. Denkbar ist auch eine Ausführungsform, bei der die Elemente 16, 17 mit Federn oder sonstigen Druckelementen vorgespannt werden. Die direkte Vorspannung des Ambosses 8 mit den zwei an den Enden des Ambosses 8 angreifenden Federn 18, 19 ist jedoch mechanisch besonders einfach und wirkungsvoll.

Die Verschwenkung des Ambosses 8 um die Schwenkachse 15 ist vorzugsweise in Richtung zu dem Ultraschallhammer 9 hin begrenzt. Dadurch ist es möglich, durch Separieren des Ambosses 8 von dem Ultraschallhammer 9 eine Lücke dazwischen zu schaffen, in die ein Folienbeutel 1 eingeführt werden kann. Werden der Amboss 8 und der Ultraschallhammer 9 dann wieder aufeinander zugeführt, wird der Foliebeutel 1 eingeklemmt. Durch eine etwas weitergehende Zusammenführung wird der Amboss 8 um die Schwenkachse 15 herum in Figur 3 nach links gekippt, wird dabei aber gleichzeitig durch die Federn 18, 19 gegen den Ultraschallhammer 9 vorgespannt. Dadurch ergibt sich der nötige Druck zwischen Amboss 8 und Ultraschallhammer 9, der eine gute Einkoppelung von Ultraschallwellen 7 in das Material des Folienbeutels 1 gewährleistet. In der Position, in der die Schweißnaht angebracht wird, ist der Amboss 8 vorzugsweise senkrecht (s. Fig. 2) oder an seinem oberen Ende leicht nach links geneigt.

Oberhalb von dem Ultraschallhammer 9 kann auch ein Federbügel beispielsweise aus Federstahl vorgesehen sein, mit dem das oben über dem Vorsprung 10 herausstehende Ende 4 des Folienbeutels 1 gegen den Amboss 8 gedrückt werden kann, um den Beutel für das Einklemmen zwischen Amboss 8 und Ultraschallhammer 9 zu fixieren. Dabei ist der Federbügel vorzugsweise in fester Relation zu dem Ultraschallhammer 9 gelagert. Der Federbügel kann das obere Ende 4 des Folienbeutels 1 gegen die in Figur 3 oberhalb des Vorsprungs 10 gezeigte ebene Fläche des Ambosses 8 drücken.

Die Verkippung des Ambosses 8 um die Achse 14 führt dazu, dass geringfügige Ungenauigkeiten der Lagerung des Ambosses 8 oder des Ultraschallhammers 9 bzw. den Foliendicken der Seitenfolienseiten 3 a, 3 b, ausgeglichen werden können. Dadurch verteilt sich der Druck, der durch die Federelemente 18, 19 erzeugt wird, gleichmäßig über die gesamte Breite des Ambosses 8 bzw. entlang der Schweißnaht 2. Dies ist für eine gleichförmige Ausbildung der Schweißnaht 2 vorteilhaft.

Von den Vorrichtungen, wie sie in Figur 3 gezeigt sind, sind vorteilhafterweise mehrere nebeneinander angeordnet. Dadurch können mit den gleichen Halterungen bzw. den gleichen Fördermitteln mehrere Folienbeutel 1 nebeneinander gleichzeitig verschweißt werden.

Vorteilhafterweise ist für jeden Folienbeutel 1 ein einzeln kippbar gelagerter Amboss 8 vorgesehen. Es kann jedoch auch ein Amboss 8 für 2 oder mehrere Folienbeutel vorgesehen sein.

## Patentansprüche

1. Vorrichtung zum Anbringen einer Schweißnaht (2) an einen Folienbeutel (1) mit:
- einem Ultraschallhammer (9) und
- einem Amboss (8) mit einer zum Ultraschallhammer (9) gerichteten Schweißseite, die einen langgestreckten Vorsprung (10) aufweist, so dass das Folienmaterial (3a, 3b, 6a, 6b, 7a, 7b) des Folienbeutels (1) zwischen dem Vorsprung (10) und dem Ultraschallhammer (9) eingeklemmt werden kann,
wobei
der Vorsprung (10) mindestens eine Vertiefung (11) aufweist, die parallel zum Vorsprung (10) verläuft, und
die mindestens eine Vertiefung (11) eine geringere Tiefe (t) hat, als der Vorsprung (10) eine Höhe (h) über der Schweißseite hat
**dadurch gekennzeichnet, dass**
die mindestens eine Vertiefung (11) eine Breite (b) hat, die etwa 25 % bis 50 % und bevorzugter 30 % bis 35 % der Breite (a) des Vorsprungs (10) beträgt und
der Amboss (8) an schwenkbaren Elementen (16) befestigt ist, wobei die Schwenkachse (15) parallel zum Vorsprung verläuft.

2. Vorrichtung nach Anspruch 1, **dadurch gekennzeichnet, dass** der Amboss (8) kippbar ist.

3. Vorrichtung nach Anspruch 2, **dadurch gekennzeichnet, dass** der Amboss (8) um mindestens zwei Achsen (14, 15) kippbar ist.

4. Vorrichtung nach einem der Ansprüche 1 bis 3, **dadurch gekennzeichnet, dass** mindestens zwei Druckelemente (18, 19), wie etwa Federn, an mindestens zwei verschiedenen Stellen eine Kraft auf den Amboss (8) ausüben, wodurch der Amboss (8) in Richtung des Ultraschallhammers (9) vorgespannt wird.

5. Vorrichtung nach Anspruch 4, **dadurch gekennzeichnet, dass** die beiden Druckelemente (18, 19) etwa an den Enden des Ambosses (8) angreifen.

6. Vorrichtung nach einem der Ansprüche 1 bis 5, **dadurch gekennzeichnet, dass** ein Federbügel vorgesehen ist, mit dem das obere Ende (4) eines Folienbeutels (1) gegen den Amboss (8) gedrückt werden kann.

7. Vorrichtung nach einem der Ansprüche 1 bis 6, **dadurch gekennzeichnet, dass** in dem Vorsprung (10) zwei, drei oder mehr Vertiefungen (11) vorgesehen sind, wobei die Breite der Vertiefungen (11) zusammen vorzugsweise etwa 30 % bis 35 % der Breite (a) des Vorsprungs (10) beträgt.

8. Vorrichtung zum Anbringen von Schweißnähten an Folienbeutel, wobei
mehrere der Vorrichtungen nach einem der Ansprüche 1 bis 7 nebeneinander angeordnet sind und
synchron betätigt werden können.

9. Verfahren zum Anbringen einer Schweißnaht (2) an einen Folienbeutel (1)
der zwischen einem Ultraschallhammer (9) und einem Amboss (8) eingeklemmt wird, wobei der Amboss (8) an einer zum Ultraschallhammer (9) gerichteten Schweißseite einen langgestreckten Vorsprung (10) aufweist,
und der Folienbeutel (1) durch Ultraschall mit einer Schweißnaht (2) versehen wird,
wobei
der Vorsprung (10) mindestens eine Vertiefung (11) aufweist, die parallel zum Vorsprung (10) verläuft, und
die mindestens eine Vertiefung (11) eine geringere Tiefe (t) hat, als der Vorsprung (10) eine Höhe (h) über der Schweißseite hat ,
**dadurch gekennzeichnet, dass**
die mindestens eine Vertiefung (11) eine Breite (b) hat, die etwa 25 % bis 50 % und bevorzugter 30 % bis 35 % der Breite (a) des Vorsprungs (10) beträgt und
der Amboss (8) an schwenkbaren Elementen (16) befestigt ist, wobei die Schwenkachse. (15) parallel zum Vorsprung verläuft.

## Claims

1. Device for applying a weld seam (2) to a foil bag (1) comprising:
- an ultrasound hammer (9) and
- an anvil (8) with a welding face directed towards the ultrasound hammer (9) which has a longitudinally extending projection (10) so that the foil material (3a, 3b, 6a, 6b, 7a, 7b) of the foil bag (1) can be clamped between the projection (10) and the ultrasound hammer (9),
and
the projection (10) has at least one depression (11) extending parallel with the projection (10), and
the at least one depression (11) has a shorter depth (t) than a height (h) of the projection (10) across the welding face,
**characterised in that**
the at least one depression (11) has a width (b) which accounts for approximately 25 % to 50 % and more preferably 30 % to 35 % of the width (a) of the projection (10) and
the anvil (8) is secured to pivotable elements (16) and the pivot axis (15) extends parallel with the projection.

2. Device as claimed in claim 1, **characterised in that** the anvil (8) can be tilted.

3. Device as claimed in claim 2, **characterised in that** the anvil (8) can be tilted about at least two axes (14, 15).

4. Device as claimed in one of claims 1 to 3, **characterised in that** at least two compression elements (18, 19) such as springs apply a force to at least two different points of the anvil (8), causing the anvil (8) to be biased in the direction of the ultrasound hammer (9).

5. Device as claimed in claim 4, **characterised in that** the two compression elements (18, 19) act approximately on the ends of the anvil (8).

6. Device as claimed in one of claims 1 to 5, **characterised in that** a spring clip is provided, by means of which the top end (4) of a foil bag (1) can be pressed against the anvil (8).

7. Device as claimed in one of claims 1 to 6, **characterised in that** two, three or more depressions (11) are provided in the projection (10), and the width of the depressions (11) together preferably accounts for approximately 30 % to 35 % of the width (a) of the projection (10).

8. Device for applying weld seams to foil bags, whereby
several of the devices as claimed in one of claims 1 to 7 are disposed adjacent to one another and
can be operated synchronously.

9. Method of applying a weld seam (2) to a foil bag (1)
which is clamped between an ultrasound hammer (9) and an anvil (8), and the anvil (8) has a longitudinally extending projection (10) on a welding face directed towards the ultrasound hammer (9),
and the foil bag (1) is provided with a weld seam (2) by means of ultrasound,
and
the projection (10) has at least one depression (11) extending parallel with the projection (10), and
the at least one depression (11) has a shorter depth (t) than a height (h) of the projection (10) across the welding face,
**characterised in that**
the at least one depression (11) has a width (b) which accounts for approximately 25 % to 50 % and more preferably 30 % to 35 % of the width (a) of the projection (10) and
the anvil (8) is secured to pivotable elements (16) and the pivot axis (15) extends parallel with the projection.

## Revendications

1. Dispositif pour appliquer une soudure (2) sur un sachet en film (1), avec :
une sonotrode (9) et
une enclume (8) avec un côté soudure, dirigé vers la sonotrode (9), qui présente une saillie oblongue (10), de sorte que le matériau en film (3a, 3b, 6a, 6b, 7a, 7b) du sachet (1) peut être coincé entre la saillie (10) et la sonotrode (9),
étant précisé que la saillie (10) présente au moins un creux (11) qui est parallèle à la saillie (10), et
que le ou les creux (11) ont une profondeur (t) qui est inférieure à la hauteur (h) de la saillie par rapport au côté soudure,
**caractérisé en ce que** le ou les creux (11) ont une largeur (b) qui représente environ 25% à 50% et de préférence 30% à 35% de la largeur (a) de la saillie (10),
et l'enclume (8) est fixée à des éléments pivotants (16), l'axe de pivotement (15) étant parallèle à la saillie.

2. Dispositif selon la revendication 1, **caractérisé en ce que** l'enclume (8) est apte à basculer.

3. Dispositif selon la revendication 2, **caractérisé en ce que** l'enclume (8) est apte à basculer sur au moins deux axes (14, 15).

4. Dispositif selon l'une au moins des revendications 1 à 3, **caractérisé en ce qu'**au moins deux éléments de pression (18, 19) tels que des ressorts exercent une force sur l'enclume (8) à au moins deux endroits différents, moyennant quoi l'enclume (8) est contrainte en direction de la sonotrode (9).

5. Dispositif selon la revendication 4, **caractérisé en ce que** les deux éléments de pression (18, 19) agissent à peu près aux extrémités de l'enclume (8).

6. Dispositif selon l'une des revendications 1 à 5, **caractérisé en ce qu'**il est prévu un étrier à ressort grâce auquel l'extrémité supérieure (4) d'un sachet en film (1) peut être pressée contre l'enclume (8).

7. Dispositif selon l'une des revendications 1 à 6, **caractérisé en ce qu'**il est prévu dans la saillie (10) deux, trois creux (11) ou plus, la largeur des creux (11) conjoints représentant environ 30% à 35% de la largeur (a) de la saillie (10).

8. Dispositif pour appliquer des soudures sur des sachets en film,
étant précisé que plusieurs des dispositifs selon l'une des revendications 1 à 7 sont disposés côte à côte,
et peuvent être actionnés de manière synchrone.

9. Procédé pour appliquer une soudure (2) sur un sachet en film (1)
qui est coincé entre une sonotrode (9) et une enclume (8)
étant précisé que l'enclume (8) présente sur un côté soudure dirigé vers la sonotrode (9) une saillie oblongue (10),
et que le sachet en film (1) est pourvu par ultrasons d'une soudure (2),
et étant précisé que la saillie (10) présente au moins un creux (11) qui est parallèle à la saillie (10), et
que le ou les creux (11) ont une profondeur (t) qui est inférieure à la hauteur (h) de la saillie par rapport au côté soudure,
**caractérisé en ce que** le ou les creux (11) ont une largeur (b) qui représente environ 25% à 50% et de préférence 30% à 35% de la largeur (a) de la saillie (10),
et l'enclume (8) est fixée à des éléments pivotants (16), l'axe de pivotement (15) étant parallèle à la saillie.
